Europäisches Patentamt

European Patent Office

Office européen des brevets

(19)

(11) Numéro de publication: **0 434 112 A1**

(12) # DEMANDE DE BREVET EUROPEEN

(21) Numéro de dépôt: 90203145.9

(22) Date de dépôt: 28.11.90

(51) Int. Cl.5: **C04B 7/21, C04B 28/08**

(30) Priorité: 20.12.89 BE 8901368

(43) Date de publication de la demande:
**26.06.91 Bulletin 91/26**

(84) Etats contractants désignés:
**BE DE DK ES FR GB GR IT LU NL**

(71) Demandeur: **S.A. CIMENTS D'OBOURG**
**3, rue des Fabriques**
**B-7034 Obourg(BE)**

Demandeur: **CIMENTS D'ORIGNY**
**15-25 boulevard de l'Amiral-Bruix**

**F-75017 Paris(FR)**

(72) Inventeur: **Degre, Jean-Pierre**
**rue P.Janson 19**
**B-7070 Le Roeulx(BE)**
Inventeur: **Musikas, Nicolas**
**rue de Saint-Quentin 1238**
**F-02100 Essigny-Le-Petit(FR)**

(74) Mandataire: **Schmitz, Yvon et al**
**Bureau Gevers S.A. rue de Livourne 7 bte 1**
**B-1050 Bruxelles(BE)**

(54) **Liant hydraulique, en particulier pour utilisation en coulis, et coulis tel qu'ainsi obtenu.**

(57) Liant hydraulique pour utilisation en coulis, comprenant un mélange de 85 à 96 % en poids de laitier granulé de haut fourneau, de 1 à 12 % en poids de clinker de ciment portland et de 1 à 6 % en poids d'un composé choisi parmi le gypse, l'anhydrite et leurs mélanges, et coulis comprenant la combinaison de ce liant hydraulique, d'eau et de bentonite et/ou d'argile.

EP 0 434 112 A1

## "LIANT HYDRAULIQUE, EN PARTICULIER POUR UTILISATION EN COULIS, ET COULIS TEL QU'AINSI OBTENU".

La présente invention a pour objet un liant hydraulique, en particulier pour l'utilisation en coulis, et les coulis tels qu'ainsi obtenus.

Il est bien connu que les ciments à base de laitier granulé, mélangés à de l'eau, des argiles, et au besoin d'autres adjuvants organiques, tels que des fluidifiants, conduit à des produits plus performants que ceux obtenus avec les ciments usuels.

Par rapport aux utilisations générales en mortier ou béton, les liants hydrauliques utilisés en coulis sont mélangés avec de l'eau dans des proportions nettement plus importantes. Le rapport eau/ciment des mortiers et bétons se situe généralement entre 0,3 et 0,6. En coulis, ce rapport se situe entre 3 et 10 et les applications les plus communes se réfèrent le plus souvent aux dilutions les plus importantes.

Les principales utilisations de ces coulis sont les suivantes :
- injection de sols;
- parois d'étanchéité;
- coulis de scellement pour parois préfabriquées;
- consolidation de sols meubles;
- rigidification des coulis d'argiles bentonitiques pour certains cas d'injection sous pression dans les fissures.

C'est ainsi que dans toute conception de fondation de barrage mettant en jeu des injections, le but recherché est de modifier certaines caractéristiques des terrains en y forçant la pénétration de coulis. Que l'objectif soit une consolidation, un étanchement ou une combinaison de ces deux caractéristiques, ces injections sont conditionnées, outre par la forme et la dimension des vides, par les possibilités de pénétration des coulis envisagés pour effectuer le traitement. La dilution préalable, la viscosité et la pompabilité du coulis sont donc des paramètres essentiels pour réaliser des injections à haute pression les plus adéquates.

Les parois et voiles d'étanchéité ont la particularité d'utiliser des coulis bentonite-ciment ou argile-ciment à faibles rapports C/E (0,1 à 0,5), additionnés éventuellement de granulats ou de sable, pour obtenir un béton dit "plastique". Certaines caractéristiques des coulis ou bétons plastiques frais, telles que la stabilité, l'homogénéité, l'onctuosité, le ressuage, les filtrats, ainsi que le temps de prise du ciment peuvent être améliorés ou modifiés par l'emploi d'adjuvants à très faibles doses.

Ces parois et voiles étanches sont appliqués aux travaux de génie civil où il est nécessaire d'établir une barrière étanche dans un sol meuble, généralement alluvionnaire et contenant une nappe aquifère. Cette barrière étanche peut être linéaire pour former un barrage à l'eau sous un barrage ou sur les rives d'un cours d'eau, ou prendre la forme d'une enceinte fermée pour mettre hors d'eau une fouille profonde. Elle doit présenter certaines caractéristiques essentielles, telles qu'une bonne étanchéité, une élasticité et une plasticité donnant une déformabilité suffisante à l'écran et une résistance mécanique en rapport avec sa destination.

Comme exemples d'application de parois étanches, on citera les cas suivants :
- Enceintes étanches en terrains alluvionnaires pour la construction de barrages, écluses et usines hydroélectriques, centrales nucléaires. Les écrans étanches épais, de 20 à 50 m de profondeur, permettent de creuser pratiquement à sec une cuvette sur le fond de laquelle sont construits les divers ouvrages. Ces écrans sont souvent provisoires, mais ils peuvent être définitifs lorsque les ouvrages sont construits sur des alluvions perméables.
- Etanchéité des digues le long des fleuves, retenues ou canaux. Il s'agit de parois étanches définitives, construites pour protéger les terrains ou agglomérations proches des berges.
- Protection d'un site d'une pollution par l'eau de mer ou par les eaux d'une usine (raffinerie ou autre). La zone à protéger est ceinturée par un écran étanche définitif.
- Parois étanches sous les barrages pour réduire les fuites à des volumes acceptables (cette étanchéité peut être faite également par des injections de coulis bentonite-ciment).
- Parois étanches autour de sites pollués et/ou destinés pour une décharge de déchets ménagers et/ou industriels.
- Parois préfabriquées de soutènement et d'étanchéité pour fouilles en site urbain, pour la construction de sous-sols d'immeubles, de parkings, etc.
  La paroi peut être prévue comme mur porteur, dans ce cas la partie du coulis située en dessous des éléments préfabriqués peut être remplacée par du béton moulé résistant.
- Parois préfabriquées pour la construction de tranchées recouvertes de dalles en béton.

- Applications très nombreuses comme canaux, souterrains autoroutiers, ferroviaires, métro, etc.

Actuellement, seuls les ciments normalisés sont utilisés pour ces applications particulières. Les ciments à haute teneur en laitier de haut fourneau sont en général utilisés pour les raisons suivantes :
- ciments à prise lente;
- ciments résistant aux milieux agressifs;

Toutefois, les ciments actuels, en situation de coulis, présentent les inconvénients suivants :
- prise (perte de fluidité) trop rapide d'où la nécessité d'additionner au mélange des agents retardateurs de prise;
- réduction importante des caractéristiques d'imperméabilité et de stabilité des suspensions amenées par les argiles;
- résistances parfois insuffisantes.

Un des buts essentiels de la présente invention consiste, par conséquent, à remédier aux inconvénients précités, et à présenter un liant hydraulique, en particulier pour utilisation en coulis, permettant d'augmenter d'une façon importante la résistance mécanique des produits durcis, cette augmentation étant d'autant plus marquée que la dilution du coulis est importante; par conséquent, à concentration en liant identique, les résistances à 28 et 90 jours sont multipliées par 2 ou 3 ou, à résistance finale identique, les proportions de liant à introduire dans le coulis sont nettement plus faibles, d'augmenter de façon significative le temps de latence du coulis, la perte de fluidité étant portée ainsi à plus de 48 heures et la mise en oeuvre du coulis étant extrêmement aisée, d'améliorer les caractéristiques d'imperméabilité du coulis et d'améliorer la résistance des coulis aux agents agressifs.

A cet effet, suivant l'invention, le liant hydraulique pour utilisation en coulis, comprend un mélange de 85 à 96 % en poids de laitier granulé de haut fourneau, de 1 à 12 % en poids de clinker de ciment portland et de 1 à 6 % en poids d'un composé choisi parmi le gypse, l'anhydrite et leurs mélanges.

Suivant une forme de réalisation particulièrement avantageuse de l'invention, le mélange susdit comprend 93 % en poids de laitier granulé de haut fourneau, 3 % en poids de clinker de ciment portland et 4 % en poids de composé choisi parmi le gypse, l'anhydrite et leurs mélanges.

Suivant une autre forme de réalisation particulièrement avantageuse de l'invention, le coulis comprend la combinaison du liant hydraulique susmentionné, d'eau et d'argile et/ou de bentonite et, éventuellement, d'un fluidifiant.

D'autres détails et particularités de l'invention ressortiront de la description donnée ci-après, à titre d'exemple non limitatif, de liants hydrauliques suivant l'invention, et de coulis renfermant ces liants hydrauliques.

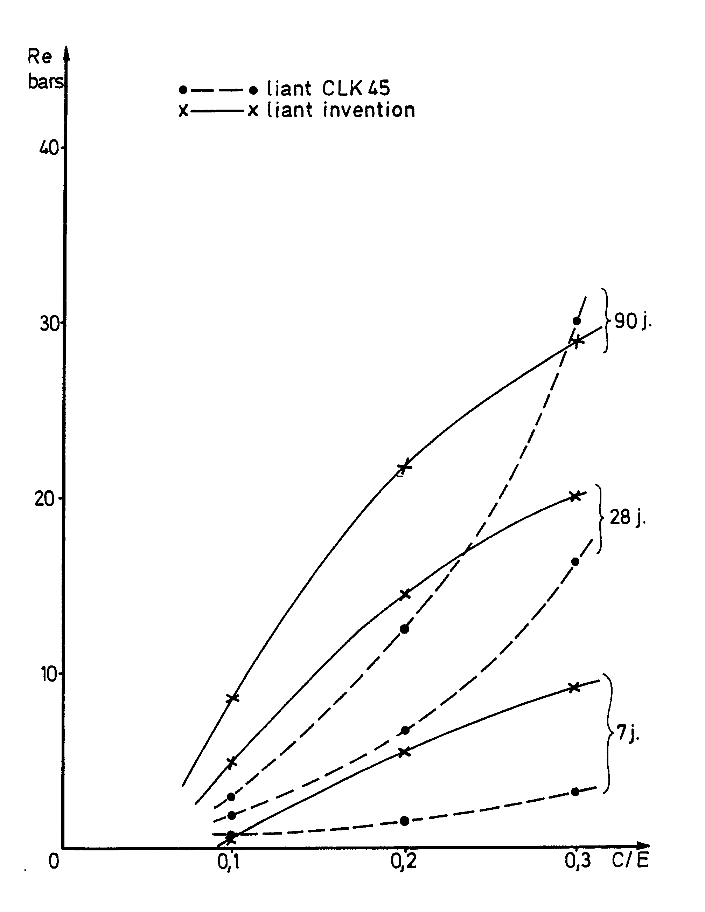

La figure unique est un graphique dont l'ordonnée représente les résistances mécaniques (en bars) de coulis obtenus avec d'une part un liant du commerce, à savoir le liant CLK 45 et, d'autre part, le liant de l'invention après 7, 28 et 90 jours, et l'abscisse représente les rapports C/E (ciment ou liant hydraulique/eau) après ces mêmes périodes.

Ainsi qu'on l'a déjà précisé précédemment, le liant hydraulique, en particulier pour utilisation en coulis, de l'invention comprend un mélange de 85 à 96 % en poids de laitier granulé de haut fourneau, de 1 à 12 % en poids de clinker de ciment portland et de 3 à 6 % en poids d'un composé choisi parmi le gypse, l'anhydrite et leurs mélanges. Une forme particulièrement avantageuse de liant hydraulique consiste en un mélange comprenant 93 % en poids de laitier granulé de haut fourneau, 3 % en poids de clinker de ciment portland et 4 % en poids de composé choisi parmi le gypse, l'anhydrite et leurs mélanges. Ainsi que cela est bien connu, le laitier utilisé à cet égard est un produit granulé obtenu par refroidissement brusque (généralement trempé à l'eau) de la scorie en fusion provenant principalement du traitement des minerais de fer en haut fourneau et possédant des propriétés hydrauliques. Le clinker est le produit de la cuisson de l'argile et du calcaire, constituants principaux du ciment, à la sortie du four, mais avant broyage. Le clinker se présente sous forme de granules durs. Ces deux constituants, c'est-à-dire le laitier granulé de haut fourneau et le clinker de ciment portland confèrent de la résistance aux produits durcis, c'est-à-dire aux coulis. Le gypse et/ou l'anhydrite, font quant à eux offices de catalyseur de réaction entre l'eau et les constituants précités. A cet égard, on a constaté, d'une façon surprenante, qu'en réduisant la teneur en clinker pour reculer la prise du coulis mais en en maintenant une quantité suffisante pour provoquer celle-ci, on obtenait un coulis d'une résistance mécanique supérieure. Caractéristique qui est tout à fait inattendue, puisque le clinker de ciment portland est l'élément qui confère le plus de résistance au coulis. Le coulis ainsi obtenu comprend la combinaison de liant hydraulique suivant l'invention, d'eau et de bentonite et/ou d'argile un fluidifiant pouvant être également ajouté au coulis pour régler son temps de prise et améliorer sa stabilité. Ce fluidifiant ne constitue pas plus de 1 % en poids de la combinaison précitée. Le fluidifiant, qui est généralement un résidu de fabrication de la cellulose, est choisi dans le groupe formé par les lignosulfonates de sodium, d'ammonium et de calcium et les mélanges de ces différents composés.

Par rapport aux coulis obtenus avec les ciments usuels, les coulis obtenus avec le liant de l'invention répondent aux critères techniques suivants :

### Rhéologie :

Les coulis sont plus stables et présentent, après addition éventuelle de colloïdes minéraux ou organiques, une sédimentation limitée des grains de liant se traduisant par une ressuée finale inférieure ou égale à 3 %.

La viscosité Marsh, mesurée au cône Marsh (norme API.RPBB) immédiatement après la préparation du coulis, permet d'être ajustée suivant les utilisations.

### Perméabilité

La perméabilité de ces coulis à 28 jours, mesurée au moyen d'un perméabilimètre à membrane latérale avec un gradient hydraulique constant compris entre 20 et 50, se situera selon les applications entre $1,10^{-7}$ et $1,10^{-9}$ m/s (loi de Darcy : $Q = K.S.i.t.$); la mesure étant réalisée sur 48 heures.

Les propriétés mécaniques supérieures des coulis obtenus avec le liant de l'invention par rapport aux coulis obtenus avec un liant commercial, à savoir le liant CLK 45, sont clairement mises en évidence dans l'exemple non limitatif suivant.

### **Exemple**

Pour la préparation du coulis, on utilise, pour 1 m³ d'eau, 30 à 50 kg/m³ de bentonite, 100 à 400 kg/m³ de liant hydraulique et du lignosulfinate de calcium (1 % en poids de la formulation précitée), pour régler le temps de prise et améliorer la stabilité du coulis.

La préparation du coulis est faite avec deux digesteurs, l'un pour la préparation de la boue primaire, l'autre pour la préparation du coulis. Dans l'attente d'être envoyé dans la tranchée, le coulis est stocké dans une cuve de réserve munie d'un agitateur. Lorsque cela est possible sur le chantier, la boue primaire est stockée 24 heures dans un silo avant l'introduction du ciment pour permettre le gonflement de la fraction argileuse (bentonite).

Une deuxième méthode de préparation du coulis consiste à utiliser une centrale à coulis automatisée, comprenant un homogénéiseur centrifuge pour la préparation de la boue primaire, suivie d'un mélangeur où l'on mélange la boue primaire et le ciment, lequel est ajouté à la boue sous forme d'une suspension dans l'eau et non à l'état sec. De manière générale, les dosages des différents produits, bentonite, liant hydraulique et additif, sont déterminés par des essais de laboratoire, compte tenu de la nature du terrain et des caractéristiques de la paroi préfabriquée.

Comme on peut le voir d'après la figure du dessin annexé, l'utilisation du liant de l'invention améliore nettement la résistance mécanique des produits durcis. Les chiffres repris ci-après sont valables pour un liant de l'invention ayant la composition suivante :
- teneur en laitier de haut fourneau - 93 % en poids
- teneur en clinker de ciment portland : 3 % en poids
- teneur en gypse : 4 % en poids.

|         | C/E = 0,1 | | | C/E = 0,2 | | | C/E = 0,3 | | |
|---------|------|------|------|------|------|------|------|------|------|
|         | 7 j | 28 j | 90 j | 7 j | 28 j | 90 j | 7 j | 28 j | 90 j |
| CLK 45  | 0,4 | 2,0 | 3,0 | 1,8 | 7,0 | 12,0 | 3,0 | 16,0 | 30,0 |
| DORSOL  | 0,2 | 5,0 | 8,6 | 5,0 | 14,0 | 22,0 | 9,0 | 20,0 | 29,0 |

Comme on peut le voir d'après le Tableau ci-dessus, les résistances mécaniques sont exprimées à 7, 28 et 90 jours en kg/cm² (ou bars). Les résistances mécaniques sont également comparées à celles obtenues en utilisant un ciment du type CLK 45 (norme française), qui correspond généralement à la composition suivante : teneur en laitier de haut fourneau : 70-80 %; teneur en clinker de ciment portland : 15 à 20 %; gypse - le restant. Les résultats sont repris ci-après sur la figure annexée et confirment que l'intérêt de l'utilisation du liant de l'invention se révèle d'autant plus nettement que la dilution initiale du coulis est la plus importante (C/E = 0,1). Or de l'avis des spécialistes, la production de coulis à haute dilution représente près de 80 % du marché.

Il est bien entendu que la présente invention n'est en aucune façon limitée aux formes de réalisation décrites et que bien des modifications peuvent y être envisagées sans sortir du cadre du présent brevet.

## Revendications

1. Liant hydraulique, en particulier pour utilisation en coulis, caractérisé en ce qu'il comprend un mélange de 85 à 96 % en poids de laitier granulé de haut fourneau, de 1 à 12 % en poids de clinker de ciment portland et de 1 à 6 % en poids d'un composé choisi parmi le gypse, l'anhydrite et leurs mélanges.

2. Liant hydraulique suivant la revendication 1, caractérisé en ce que le mélange susdit comprend 93 % en poids de laitier granulé de haut fourneau, 3 % en poids de clinker de ciment portland et 4 % en poids de composé choisi parmi le gypse, l'anhydrite et leurs mélanges.

3. Coulis, caractérisé en ce qu'il comprend la combinaison de liant hydraulique suivant l'une ou l'autre des revendications 1 et 2, d'eau et de bentonite et/ou d'argile.

4. Coulis suivant la revendication 3, caractérisé en ce qu'il comprend un fluidifiant.

5. Coulis suivant la revendication 4, caractérisé en ce que le fluidifiant est choisi dans le groupe formé par les lignosulfonates de sodium, d'ammonium et de calcium et les mélanges d'au moins deux de ces composés.

6. Coulis suivant l'une ou l'autre des revendications 4 et 5, caractérisé en ce qu'il comprend, pour 1 $m^3$ d'eau, de 30 à 50 kg de bentonite et/ou d'argile, de 100 à 400 kg de liant hydraulique suivant l'une ou l'autre des revendications 1 et 2 et tout au plus 1 % en poids de fluidifiant par rapport à la quantité de liant hydraulique précitée.

**Office européen
des brevets**

**RAPPORT DE RECHERCHE
EUROPEENNE**

Numéro de la demande

**EP 90 20 3145**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 726 903 (HEIDELBERGER ZEMENT) <br> * page 3, lignes 14 - 57 * <br> — — — | 1,4,5 | C 04 <br> B 7/21 <br> C 04 B 28/08 |
| Y | WO-A-8 805 425 (GEOCHEMICAL CORPORATION) <br> * page 3, lignes 13 - 34 * * page 4, lignes 3 - 36 @ page 6, ligne 28 - page 7, ligne 1; revendications 1, 2, 6 * <br> — — — | 1,3,4 | |
| Y | DE-A-3 742 566 (H.WETHMAR) <br> * colonne 1, ligne 34 - colonne 2, ligne 41; revendications 1, 8, 9, 12, 14 * <br> — — — — — | 1,3,4 | |

**DOMAINES TECHNIQUES RECHERCHES (Int. Cl.5)**

C 04 B

Le présent rapport de recherche a été établi pour toutes les revendications

| Lieu de la recherche | Date d'achèvement de la recherche | Examinateur |
|---|---|---|
| La Haye | 13 mars 91 | THEODORIDOU E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant